# EUROPÄISCHE PATENTSCHRIFT

(11) **EP 3 132 302 B1**
(45) Veröffentlichungstag und Bekanntmachung des Hinweises auf die Patenterteilung: **13.01.2021**
(21) Anmeldenummer: 15717859.1
(22) Anmeldetag: 16.04.2015
(51) Int. Cl.: G02B 27/01, G02B 6/34, G02C 7/02

(54) **BRILLENGLAS FÜR EINE AUF DEN KOPF EINES BENUTZERS AUFSETZBARE UND EIN BILD ERZEUGENDE ANZEIGEVORRICHTUNG**
EYEGLASS LENS FOR A DISPLAY DEVICE, WHICH DISPLAY DEVICE CAN BE PLACED ON THE HEAD OF A USER AND PRODUCES AN IMAGE
VERRE DE LUNETTES DESTINÉ À UN DISPOSITIF D'AFFICHAGE POUVANT ÊTRE PORTÉ SUR LA TÊTE D'UN UTILISATEUR ET PRODUISANT UNE IMAGE

(30) Priorität: 17.04.2014 DE 102014207500
(43) Veröffentlichungstag der Anmeldung: 22.02.2017
(73) Patentinhaber: tooz technologies GmbH, 73430 Aalen (DE)
(72) Erfinder: LINDIG, Karsten, 99084 Erfurt (DE); DOBSCHAL, Hans-Jürgen, 99510 Kleinromstedt (DE)
(74) Vertreter: Patentanwälte Geyer, Fehners & Partner mbB
(86) Internationale Anmeldenummer: PCT/EP2015/058279
(87) Internationale Veröffentlichungsnummer: WO 2015/158834

(56) Entgegenhaltungen:
- EP-A1- 2 343 591
- WO-A2-2010/034639
- DE-A1- 3 904 640
- US-A- 5 369 415
- US-A1- 2007 008 624
- US-A1- 2008 094 586
- US-A1- 2013 163 089
- US-B1- 7 513 674

## Beschreibung

Die vorliegende Erfindung betrifft ein Brillenglas für eine auf den Kopf eines Benutzers aufsetzbare und ein Bild erzeugende Anzeigevorrichtung, wobei das Brillenglas eine Vorderseite und eine Rückseite, einen Einkoppelabschnitt und einen vom Einkoppelabschnitt beabstandeten Auskoppelabschnitt sowie einen Lichtführungskanal aufweist, der dazu geeignet ist, Lichtbündel von Pixeln des erzeugten Bildes, die über den Einkoppelabschnitt des Brillenglases in das Brillenglas eingekoppelt sind, im Brillenglas bis zum Auskoppelabschnitt zu führen, von dem sie aus dem Brillenglas ausgekoppelt werden, wobei der Lichtführungskanal eine erste reflektierende Schicht aufweist, die sich vom Einkoppelabschnitt bis zum Auskoppelabschnitt erstreckt und an der die Lichtbündel zur Führung bis zum Auskoppelabschnitt reflektiert werden.

Bei einem solchen Brillenglas besteht die Schwierigkeit, dass aufgrund der reflektierenden Eigenschaft der reflektierenden Schicht des Lichtführungskanals dieser für einen Benutzer sich deutlich von anderen Bereichen des Brillenglases bei Betrachtung der Umgebung durch das Brillenglas abhebt.

Die EP 2 343 591 A1, WO 2010/034639 A2, US 2013/0163089 A1, US 5 369 415 A, US 2007/0008624 A1 und die US 7 513 674 B1 zeigen jeweils ein Brillenglas für eine auf den Kopf eines Benutzers aufsetzbare und ein Bild erzeugende Anzeigevorrichtung, wobei das Brillenglas eine Vorderseite und eine Rückseite, einen Einkoppelabschnitt und einen vom Einkoppelabschnitt beabstandeten Auskoppelabschnitt sowie einen Lichtführungskanal aufweist, der dazu geeignet ist, Lichtbündel von Pixeln des erzeugten Bildes, die über den Einkoppelabschnitt des Brillenglases in das Brillenglas eingekoppelt sind, im Brillenglas bis zum Auskoppelabschnitt zu führen, von dem sie aus dem Brillenglas ausgekoppelt werden. Die US 2008/094586 A1 zeigt ein Brillenglas mit den Merkmalen des Oberbegriffs des Anspruches 1. Die DE 39 04 640 A1 beschreibt ein optisches Suchersystem für Kameras mit einem Halbspiegel, der durch abwechselnd nebeneinander angeordnete reflektive und transparente Abschnitte gebildet ist.

Ausgehend hiervon ist es daher Aufgabe der Erfindung, ein Brillenglas der eingangs genannten Art so weiterzubilden, dass der optisch auffallende Unterschied zwischen dem Lichtführungskanal einerseits und dem restlichen Brillenglas andererseits verringert ist. Die Aufgabe wird bei einem Brillenglas der eingangs genannten Art dadurch gelöst, dass die erste reflektierende Schicht mehrere voneinander beabstandete transparente Lücken aufweist. Somit ist die Transmissivität des Lichtführungskanals im Vergleich zu einer Lösung, bei der die reflektierende Schicht durchgehend ist, erhöht.

Bei dem erfindungsgemäßen Brillenglas kann die reflektierende Schicht segmentiert ausgebildet sein und voneinander durch die mehreren Lücken getrennte, reflektierende Segmente aufweisen.

Die mehreren Lücken können in einer ersten Richtung vom

Einkoppelabschnitt zum Auskoppelabschnitt hin und/oder quer zur ersten Richtung beabstandet sein.

Ferner können die mehreren Lücken in einer vorbestimmten Richtung (z.B. der ersten Richtung und/oder quer dazu) äquidistant angeordnet sein. Dies ist jedoch nicht zwingend notwendig. Es können auch unregelmäßige Abstände vorliegen.

Die zumindest eine Lücke kann kreisförmig, oval, oder polygonförmig ausgebildet sein. Es ist jedoch auch jede andere geometrische Form möglich.

Insbesondere können mehrere Lücken vorgesehen sein, die unterschiedliche Formen aufweisen.

Ferner kann außerhalb des Lichtführungskanals eine winkelselektive Absorptionsschicht vor der zumindest einen Lücke der ersten reflektierenden Schicht angeordnet sein, die Licht, das unter einem Winkel aus einem Bereich von einem vorbestimmten ersten Grenzwinkel bis zu 90° auf die Absorptionsschicht trifft, absorbiert und Licht, das unter einem Winkel von 0° bis zu einem vorbestimmten zweiten Grenzwinkel, der kleiner oder gleich zum ersten Grenzwinkel ist, trifft, transmittiert. Dadurch kann z.B. ein durch die Lücke aus dem Lichtführungskanal austretendes Lichtbündel gleich absorbiert werden. Dies führt zu dem Vorteil, dass dieses Lichtbündel nicht zu unerwünschtem Streulicht führen kann, was bei einer weiteren Reflexion des Lichtbündels an z.B. einer Materialgrenzfläche in Richtung zurück zum Lichtführungskanal auftreten könnte.

Bei dem erfindungsgemäßen Brillenglas kann zwischen der zumindest einen Lücke und der reflektierenden Schicht ein Übergangsbereich ausgebildet sein, in dem die Reflektivität in Richtung von der Lücke bis zur reflektierenden Schicht zunimmt. Die Zunahme kann insbesondere kontinuierlich und/oder stetig sein.

Insbesondere kann der Lichtführungskanal eine der ersten reflektierenden Schicht gegenüberliegende zweite reflektierende Schicht aufweisen. Auch die zweite reflektierende Schicht kann zumindest eine transparente Lücke aufweisen.

Insbesondere kann die zumindest eine transparente Lücke der ersten reflektierenden Schicht einer transparenten Lücke der zweiten reflektierenden Schicht gegenüberliegen.

Ferner können die beiden gegenüberliegenden reflektierenden Schichten gleich ausgebildet sein. Insbesondere können sie deckungsgleich ausgebildet sein.

Die erste reflektierende Schicht kann plan oder gekrümmt ausgebildet sein. Das gleiche gilt für die zweite reflektierende Schicht.

Die reflektierende Schicht ist insbesondere eine Spiegelschicht, die eine Reflektivität von 100 % oder nahezu 100 % für sichtbares Licht aufweist. Es ist jedoch auch möglich, dass die reflektierende Schicht als teiltransparente Schicht ausgebildet ist.

Die zumindest eine Lücke kann bevorzugt eine Transmission von 100 % oder nahezu 100 % für Licht aus dem sichtbaren Wellenlängenbereich aufweisen. Es ist jedoch auch möglich, dass die transmissive Lücke als teiltransparente Schicht ausgebildet ist, die eine gewisse reflektierende Eigenschaft aufweist. Auf jeden Fall ist jedoch die reflektierende Eigenschaft der transmissiven Lücke geringer als die der reflektierenden Schicht. Die Reflektivität der reflektierenden Schicht ist somit stets höher als die Reflektivität der Lücke bzw. Lücken.

Sowohl die reflektierende Schicht als auch der Bereich der Lücken kann jeweils als metallische Schicht bzw. metallische Beschichtung ausgebildet sein. Es ist auch möglich, dass die reflektierende Schicht sowie die Lücken so ausgebildet sind, dass eine polarisationsabhängige Reflexion vorliegt. Insbesondere können Lichtbündel eines ersten Polarisationszustandes reflektiert (zumindest zum Teil reflektiert) und eines zweiten Polarisationszustandes, der orthogonal zum ersten Polarisationszustand ist, transmittiert werden.

Bei dem erfindungsgemäßen Brillenglas können die Vorderseite und/oder die Rückseite gekrümmt ausgebildet sein. Insbesondere kann die Rückseite eine Krümmung aufweisen, die so gewählt ist, dass eine Fehlsichtigkeitskorrektur bewirkt wird. Dies führt zu dem Vorteil, dass auch für die ausgekoppelten Lichtbündel die gewünschte Fehlsichtigkeitskorrektur vorliegt, da diese so ausgekoppelt werden, dass sie über die Rückseite aus dem Brillenglas austreten.

Das erfindungsgemäße Brillenglas kann mehrschalig ausgebildet sein und z.B. eine Innenschale und eine Außenschale aufweisen. Insbesondere sind die Innen- und Außenschale aus den gleichen Materialien gebildet.

Des weiteren kann die Innenschale mit der Außenschale flächig verbunden sein (z.B. verklebt oder verkittet mit einem optischen Kitt oder optischen Kleber).

Bevorzugt sind die einander zu weisenden Seiten von Innen- und Außenschale zueinander komplementär ausgebildet.

Insbesondere können diese einander zu weisenden Seiten sphärisch gekrümmt sein.

Des weiteren kann die Außenseite und/oder die Innenseite sphärisch gekrümmt sein.

Natürlich können auch mehr als zwei Schalen vorgesehen sein.

Der Auskoppelabschnitt kann mehrere nebeneinander angeordnete reflektive Umlenkflächen aufweisen. Die reflektiven Umlenkflächen können auch als reflektive Facetten bezeichnet werden. Sie können eine Reflektivität von nahezu 100 % aufweisen und in diesem Fall als Spiegelflächen bezeichnet werden. Es ist auch möglich, dass sie eine geringere Reflektivität aufweisen und somit teiltransparent ausgebildet sind.

Die reflektiven Umlenkflächen können jeweils plan oder gekrümmt ausgebildet sein. Ferner können die Umlenkflächen fresnelartig eine gekrümmte Reflexionsfläche nachstellen, die neben einer reiner Strahlumlenkung auch eine abbildende Eigenschaft aufweist.

Der Auskoppelabschnitt kann im Brillenglas vergraben sein. Insbesondere kann der Auskoppelabschnitt so ausgebildet sein, dass die Vorderseite des Brillenglases eine glatte, durchgehende Fläche ist.

Der Einkoppelabschnitt kann in einem Randbereich des Brillenglases und der Auskoppelabschnitt kann in einem Mittelbereich des Brillenglases ausgebildet sein.

Die Innenschale und die Außenschale (und eventuelle weitere Schalen) können jeweils einstückig ausgebildet sein. Es ist jedoch auch möglich, dass die Innenschale und/oder die Außenschale (und/oder eventuelle weitere Schalen) mehrstückig ausgebildet ist.

Es wird ferner eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik, die ein Brillenglas nach einem der obigen Ansprüche aufweist und die das erzeugte Bild im auf dem Kopf des Benutzers aufgesetzten Zustand der Haltevorrichtung so abbildet, dass es der Benutzer als virtuelles Bild wahrnehmen kann, bereitgestellt.

Die Abbildungsoptik kann das Brillenglas als einziges optisches Element aufweisen. Es ist jedoch auch möglich, dass die Abbildungsoptik neben dem Brillenglas noch zumindest ein weiteres optisches Element umfaßt. Insbesondere kann die Außenschale zusammen mit dem zumindest einem weiteren optischen Element einstückig ausgebildet sein. Alternativ ist es möglich, dass die Außenschale mit dem zumindest einen weiteren optischen Element (z.B. durch Verkitten oder Verkleben) verbunden ist. Ferner kann das zumindest eine weitere optische Element von der Außenschale beabstandet sein.

Das zumindest eine weitere optische Element kann z.B. eine Kollimationsoptik sein, die zwischen dem Brillenglas und dem Bilderzeugungsmodul angeordnet ist, so dass die Lichtbündel vom Bilderzeugungsmodul als kollimierte Bündel in das Brillenglas eingekoppelt werden können.

Ferner kann die Anzeigevorrichtung eine Steuereinheit aufweisen, die das Bilderzeugungsmodul ansteuert.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Der Bildgeber kann eine Mehrzahl von Pixeln aufweisen, die z.B. in Zeilen und Spalten angeordnet sein können. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Die erfindungsgemäße Anzeigevorrichtung kann weitere, dem Fachmann bekannte Elemente aufweisen, die zu ihrem Betrieb notwendig sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführungsform der erfindungsgemäßen Anzeigevorrichtung;
- Fig. 2: eine vergrößerte Teilschnittansicht des ersten Brillenglases 3 einschließlich einer schematischen Darstellung des Bilderzeugungsmoduls;
- Fig. 3: eine schematische vergrößerte Ansicht auf die Rückseite 15 des erfindungsgemäßen Brillenglases im Bereich des Lichtführungskanals 12 und des Auskoppelabschnitts 13;
- Fig. 4: eine schematische vergrößerte Schnittansicht gemäß Fig. 2 durch den Lichtführungskanal 12, wo zur Vereinfachung der Darstellung die Vorder- und Rückseite 18, 15, die reflektierenden Schichten 21, 22 und der Auskoppelabschnitt 13 geradlinig und nicht gekrümmt dargestellt sind;
- Fig. 5: eine Abwandlung des erfindungsgemäßen Brillenglases in einer Schnittdarstellung gemäß Fig. 4;
- Fig. 6: eine Abwandlung des erfindungsgemäßen Brillenglases in einer Ansicht gemäß Fig. 3;
- Fig. 7: eine Abwandlung des erfindungsgemäßen Brillenglases in einer Ansicht gemäß Fig. 3;
- Fig. 8: eine Abwandlung des erfindungsgemäßen Brillenglases in einer Ansicht gemäß Fig. 3;
- Fig. 9: eine Abwandlung des erfindungsgemäßen Brillenglases in einer Ansicht gemäß Fig. 3;
- Fig. 10: eine Abwandlung des erfindungsgemäßen Brillenglases in einer Ansicht gemäß Fig. 3;
- Fig. 11: eine Abwandlung des erfindungsgemäßen Brillenglases in einer Ansicht gemäß Fig. 3;
- Fig. 12: eine Darstellung des Reflexionsverlaufs der ersten reflektierenden Schicht 21 in der y-Richtung;
- Fig. 13: eine Darstellung des Reflexionsverlaufs einer Weiterbildung der ersten reflektierenden Schicht 21 in der y-Richtung;
- Fig. 14: eine Darstellung des Reflexionsverlaufs einer Weiterbildung der ersten reflektierenden Schicht 21 in der y-Richtung;
- Fig. 15: eine Darstellung des Reflexionsverlaufs einer Weiterbildung der ersten reflektierenden Schicht 21 in der y-Richtung;
- Fig. 16: eine weitere Ausführungsform des erfindungsgemäßen Brillenglases in einer Schnittansicht gemäß Fig. 2, und
- Fig. 17: eine weitere Ausführungsform des erfindungsgemäßen Brillenglases in einer Schnittansicht gemäß Fig. 2.

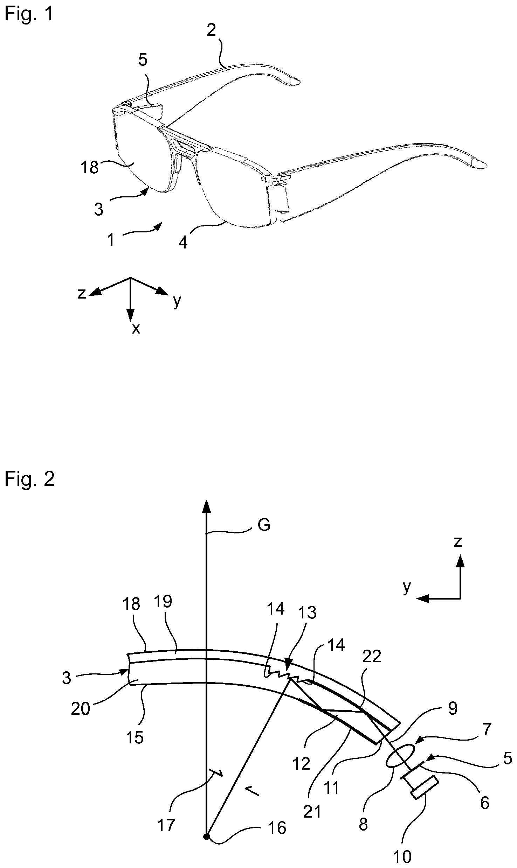

Bei der in Fig. 1 gezeigten Ausführungsform umfaßt die erfindungsgemäße Anzeigevorrichtung 1 eine auf den Kopf eines Benutzers aufsetzbare Haltevorrichtung 2, die z.B. in Art eines herkömmlichen Brillengestells ausgebildet sein kann, sowie ein erstes und ein zweites Brillenglas 3, 4, die an der Haltevorrichtung 2 befestigt sind. Die Haltevorrichtung 2 mit den Brillengläsern 3, 4 kann z.B. als Sportbrille, Sonnenbrille und/oder Brille zur Korrektur einer Fehlsichtigkeit ausgebildet sein, wobei dem Benutzer über das erste Brillenglas 3 ein virtuelles Bild in sein Gesichtsfeld eingespiegelt werden kann, wie nachfolgend beschrieben wird.

Dazu umfaßt die Anzeigevorrichtung 1 ein Bilderzeugungsmodul 5, das im Bereich des rechten Brillenbügels der Haltevorrichtung 2 angeordnet sein kann, wie in Fig. 1 schematisch dargestellt ist. Das Bilderzeugungsmodul 5 kann ein flächiges Bilderzeugungselement 6 (Fig. 2), wie z.B. einen OLED-, einen CMOS- oder einen LCoS-Chip oder eine Kippspiegelmatrix, mit einer Vielzahl von z.B. in Spalten und Zeilen angeordneten Pixeln aufweisen.

Die Brillengläser 3 und 4 und insbesondere das erste Brillenglas 3 sind nur beispielshalber zusammen mit der erfindungsgemäßen Anzeigevorrichtung 1 beschrieben. Die Brillengläser 3, 4 bzw. zumindest das erste Brillenglas 3 sind jeweils für sich als erfindungsgemäßes Brillenglas 3, 4 oder als erfindungsgemäßes optisches Element ausgebildet. Das erfindungsgemäße optische Element kann auch in anderem Zusammenhang als mit der hier beschriebenen Anzeigevorrichtung 1 eingesetzt werden. Daher kann das optische Element, wenn es als Brillenglas ausgebildet ist, natürlich auch als zweites Brillenglas 4 ausgebildet sein.

Wie am besten aus der vergrößerten, schematischen Teilschnittansicht in Fig. 2 ersichtlich ist, weist die Anzeigevorrichtung 1 eine Abbildungsoptik 7 auf, die ein zwischen dem Bilderzeugungselement 6 bzw. dem Bildgeber 6 und dem ersten Brillenglas 3 angeordnetes Optikelement 8 enthält. Des weiteren dient das erste Brillenglas 3 selbst auch als Teil der Abbildungsoptik 7.

Von jedem Pixel des Bildgebers 6 kann ein Lichtbündel 9 ausgehen. Durch eine entsprechende Ansteuerung der Pixel des Bildgebers 6 mittels einer Steuereinheit 10, die Teil des Bilderzeugungsmoduls 5 sein kann, kann das gewünschte Bild erzeugt werden. In Fig. 2 ist stellvertretend für die Lichtbündel 9 der Strahlengang eines Lichtstrahls eingezeichnet, so dass nachfolgend auch von dem Lichtstrahl 9 die Rede ist.

Der vom Bildgeber 6 ausgehende Lichtstrahl 9 läuft durch das Optikelement 8 und tritt über einen Einkoppelabschnitt 11 (hier die Stirnseite des ersten Brillenglases 3) in das erste Brillenglas 3 ein und wird in diesem entlang eines Lichtführungskanals 12 bis zu einem Auskoppelabschnitt 13 geführt. Der Auskoppelabschnitt 13 weist mehrere nebeneinander angeordnete reflektive Umlenkflächen 14 (die auch als reflektive Facetten bezeichnet werden können) auf, an denen eine Reflexion der Lichtstrahlen 9 in Richtung zu einer Rückseite 15 des ersten Brillenglases 3 stattfindet, so dass die Lichtstrahlen 9 über die Rückseite 15 aus dem ersten Brillenglas 3 austreten.

Somit kann ein Benutzer, wenn er die erfindungsgemäße Anzeigevorrichtung 1 bestimmungsgemäß auf dem Kopf trägt, das mittels des Bildgebers 6 erzeugte Bild als virtuelles Bild wahrnehmen, wenn er auf den Auskoppelabschnitt 13 blickt. Bei der hier beschriebenen Ausführungsform muß der Benutzer bezogen auf die Blickrichtung G eines Geradeausblicks um ca. 40° nach rechts schauen. In Fig. 2 ist zur Verdeutlichung der Drehpunkt 16 des Auges des Benutzers sowie die Eyebox 17 bzw. die Austrittspupille 17 der Abbildungsoptik eingezeichnet. Die Eyebox 17 ist der Bereich, der durch die Anzeigevorrichtung 1 bereitgestellt wird und in dem sich das Auge des Benutzers bewegen kann und er stets noch das erzeugte Bild als virtuelles Bild sehen kann.

Obwohl bei der beschriebenen Ausführungsform die Einkopplung über die Stirnseite des ersten Brillenglases 3 durchgeführt ist und somit der Einkoppelabschnitt 11 auf der Stirnseite des ersten Brillenglases 3 ausgebildet ist, ist es auch möglich, eine Einkopplung über die Rückseite 15 des ersten Brillenglases durchzuführen.

Wie in der schematischen Darstellung in Fig. 2 gezeigt ist, ist sowohl die Rückseite 15 als auch die Vorderseite 18 des ersten Brillenglases 3 gekrümmt ausgebildet.

Das erste Brillenglas 3 ist ferner zweischalig ausgebildet und umfaßt eine Außenschale 19 sowie eine Innenschale 20.

Der Lichtführungskanal 12 weist zwei gegenüberliegende reflektierende Schichten 21, 22 auf, die sich jeweils vom Einkoppelabschnitt 11 bis zum Auskoppelabschnitt 13 erstrecken. Die erste reflektierende Schicht 21 ist auf der Rückseite 15 ausgebildet. Die zweite reflektierende Schicht 22 ist zwischen der Innenschale 20 und der Außenschale 19 ausgebildet.

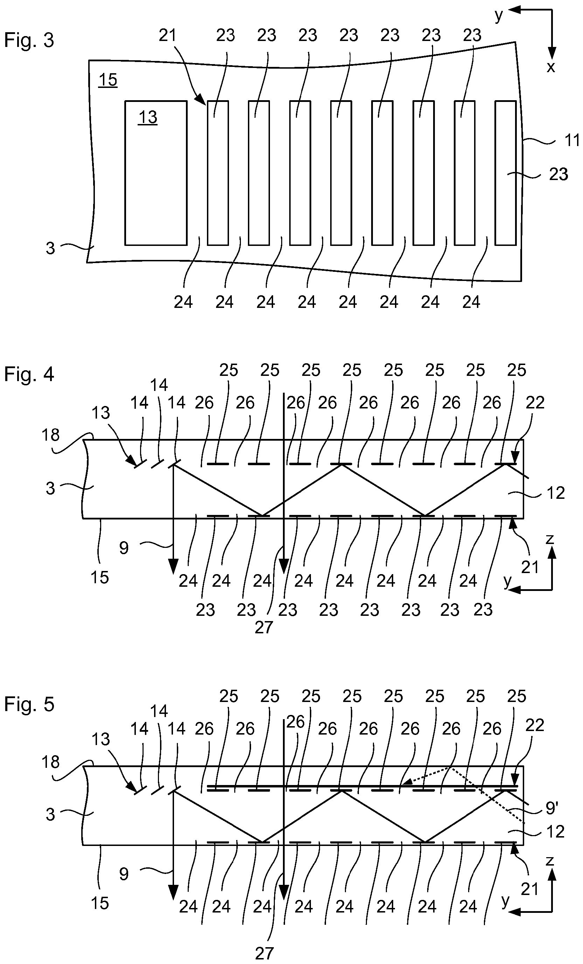

Wie insbesondere der vergrößerten Ansicht auf die Rückseite 15 des Brillenglases 3 gemäß Fig. 3 zu entnehmen ist, ist die erste reflektierende Schicht 21 nicht als durchgehende Schicht zwischen dem Einkoppelabschnitt 11 und dem Auskoppelabschnitt 13 ausgebildet, sondern als segmentierte Schicht. Die erste reflektierende Schicht 21 weist somit reflektierende Segmente 23 auf, die in einer ersten Richtung vom Einkoppelabschnitt 11 zum Auskoppelabschnitt 13 voneinander beabstandet sind, so dass zwischen den reflektierenden Segmenten 23 Lücken 24 vorhanden sind. In diesen Lücken 24 ist kein Material der reflektierenden Schicht 21 aufgebracht. Somit sind die Lücken 24 transparent.

In der schematischen, vergrößerten Schnittansicht in Fig. 4 ist ersichtlich, dass die zweite reflektierende Schicht 22 in gleicher Weise wie die erste reflektierende Schicht 21 reflektierende Segmente 25 mit dazwischen vorgesehenen Lücken 26 aufweist. Die reflektierenden Segmente 23 und 25 der beiden reflektierenden Schichten 21, 22 sind so angeordnet, dass sie einander gegenüberliegen. Somit liegen auch die Lücken 24 und 26 einander gegenüber und bilden somit transparente Bereiche, die durch die beiden reflektierenden Schichten 21 und 22 verlaufen.

Wie in Fig. 4 ferner angedeutet ist, werden die Lichtbündel 9 durch Reflexionen an den reflektierenden Schichten 21 und 22 bzw. an den entsprechenden reflektierenden Segmenten 23 und 25 vom Einkoppelabschnitt 11 bis zum Auskoppelabschnitt 13 geführt. Am Auskoppelabschnitt 13 werden die Lichtbündel dann durch Reflexion an den Facetten 14 so in Richtung zur Rückseite 15 hin umgelenkt, dass sie aus dem ersten Brillenglas 3 ausgekoppelt werden.

Ferner kann aufgrund der vorgesehenen Lücken 24, 26 Umgebungslicht 27 durch den Lichtführungskanal 12 hindurchlaufen und vom Benutzer bei aufgesetzter Anzeigevorrichtung 1 wahrgenommen werden.

Die reflektierenden Schichten 21, 22, die Vorderseite 18, die Rückseite 15 und der Auskoppelabschnitt 13 sind zur Vereinfachung der Darstellung in Fig. 4 jeweils plan gezeigt. Tatsächlich sind sie bei der beschriebenen Ausführungsform gekrümmt ausgebildet. In einer Abwandlung können jedoch die reflektierende Schicht 21, die reflektierende Schicht 22, die Vorderseite 18, die Rückseite 15 und/oder der Auskoppelabschnitt 13 plan ausgebildet sein. Die nicht plan ausgebildeten Schichten und/oder Seiten sind dann gekrümmt.

Bei dem erfindungsgemäßen Brillenglas 3 kann somit durch die Größe und Anordnung der reflektierenden Segmente 23, 25 und somit durch die Größe und Anordnungen der Lücken 24, 26 die Transmission des Lichtführungskanals 12 eingestellt werden. Somit ist für einen Benutzer selbst im Bereich des Lichtführungskanals 12 noch die Umgebung wahrnehmbar.

Die Transmission durch den Lichtführungskanal ergibt sich im wesentlichen aus dem Verhältnis der Fläche der reflektierenden Segmente 23 bzw. 25 zur Fläche der Lücken 24 bzw. 26 sowie aus der relativen Anordnung der reflektierenden Segmente 23 der ersten reflektierenden Schicht zu den reflektierenden Segmenten der zweiten reflektierenden Schicht 22.

In Fig. 5 ist in gleicher Weise wie in Fig. 4 in einer Schnittansicht eine weitere Ausführungsform gezeigt, die sich von der bisher beschriebenen Ausführungsform insbesondere darin unterscheidet, dass außerhalb des Lichtführungskanals 12 eine winkelselektive Absorptionsschicht 28 vor den Lücken 24 der zweiten reflektierenden Schicht 21 angeordnet ist. Diese dient dazu, Streulicht zu unterdrücken. So kann beispielsweise ein Lichtbündel 9' durch eine Lücke 26 auf die gekrümmte Vorderseite 18 treffen und von dieser zurück Richtung Lichtführungskanal 12 reflektiert werden. Dieses Lichtbündel 9' kann dann unter einem solchen Winkel auf die Absorptionsschicht 28 treffen, dass sie von dieser absorbiert wird und nicht wieder in den Lichtführungskanal eintritt. Dazu ist die winkelselektive Absorptionsschicht so ausgelegt, dass sie für einen Einfallswinkel von 0° bis zu einem vorbestimmten ersten Grenzwinkel transmissiv ist und für einen Einfallswinkel größer als ein vorbestimmter zweiter Grenzwinkel, der größer als oder gleich wie der erste Grenzwinkel ist, bis zu 90° (stets zur Normalen auf die Absorptionsschicht 28 bezogen) absorbierend ist. Daher ist die Absorptionsschicht 28 für Umgebungslicht 27 transmissiv, wie in Fig. 5 angedeutet ist.

Die beschriebene Segmentierung der ersten und zweiten reflektierenden Schicht 21 und 22 ist nur beispielhaft zu verstehen und natürlich kann auch jede andere geometrische Aufteilung bzw. Segmentierung durchgeführt werden.

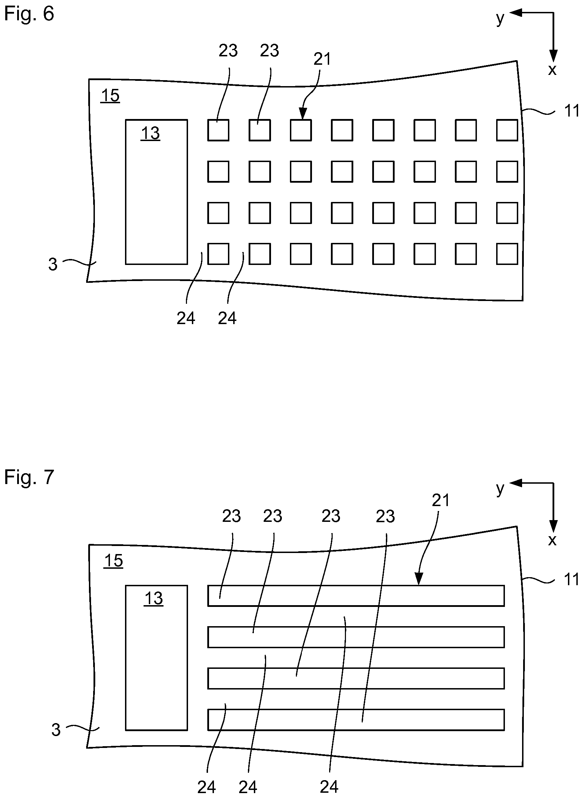

So können die reflektierenden Segmente 23 beispielsweise Quadrate sein, die in einem regelmäßigen Muster angeordnet sind, wie in Fig. 6 gezeigt ist.

Es ist auch möglich, dass die reflektierenden Segmente 23 Rechtecke sind, die sich in der ersten Richtung erstrecken und quer dazu beabstandet sind, wie in Fig. 7 gezeigt ist.

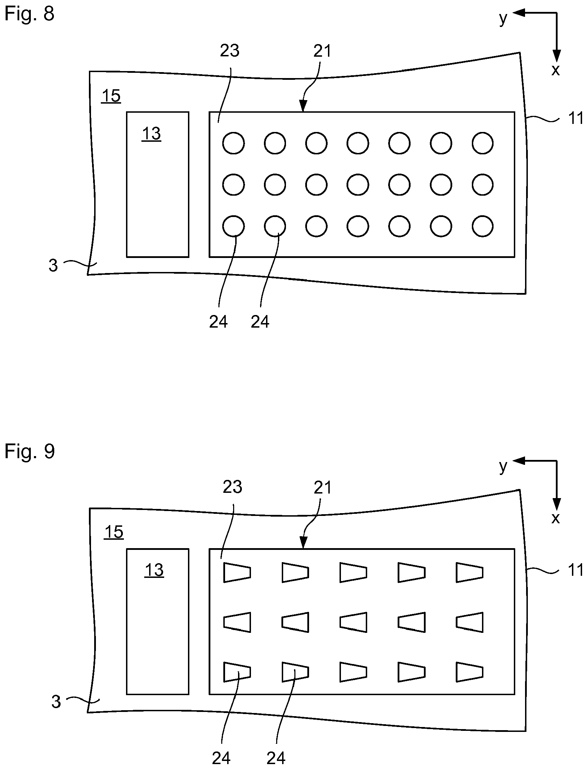

Bei der Variante gemäß Fig. 8 sind die Lücken 24 kreisförmig ausgebildet und in einem regelmäßigen Muster angeordnet.

Es ist auch möglich, die Lücken trapezförmig auszubilden und entsprechend anzuordnen wie in Fig. 9 gezeigt ist.

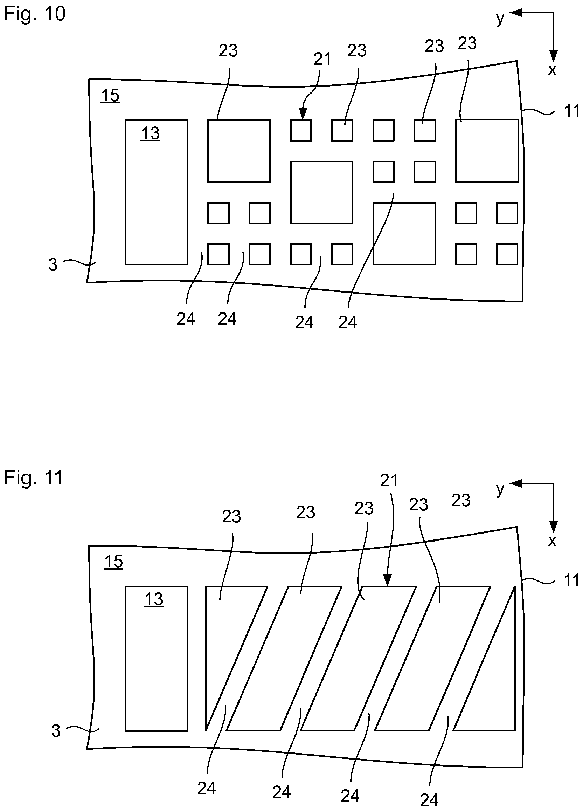

Bei der in Fig. 10 gezeigten Ausführungsform sind die reflektierenden Segmente 23 Quadrate unterschiedlicher Größe.

Bei der in Fig. 11 gezeigten Ausführungsform sind die reflektierenden Segmente im wesentlichen unter einem Winkel zur x-Richtung und y-Richtung verlaufende Streifen.

Natürlich muß die Anordnung der Lücken nicht regelmäßig sein. Es ist auch eine Anordnung mit unterschiedlichen Abständen möglich.

Ferner sind andere Formen für die Lücken 24 sowie für die reflektiven Segmente 23 möglich, als die die schon beschrieben wurden. So können Polygone, Ellipsen, etc. als Formen verwendet werden. Es müssen auch nicht gleiche Formen verwendet werden. Es können unterschiedliche Formen für die Lücken und/oder Segmente eingesetzt werden.

Die reflektierenden Segmente haben bevorzugt eine Reflektivität von 100 % oder nahezu 100 % für sichtbares Licht. Es ist jedoch auch möglich, dass sie eine geringere Reflektivität aufweisen.

Die Lücken können zu 100 % transmissiv sein oder auch eine gewisse Reflektivität aufweisen. In letzterem Fall wären die Lücken teiltransparent. Auf jeden Fall ist die Reflektivität der Lücken stets geringer als die Reflektivität der reflektierenden Segmente und in gleicher Weise ist die Transmissivität der Lücken 24, 26 stets größer als die Transmissivität der reflektierenden Segmente 23, 25.

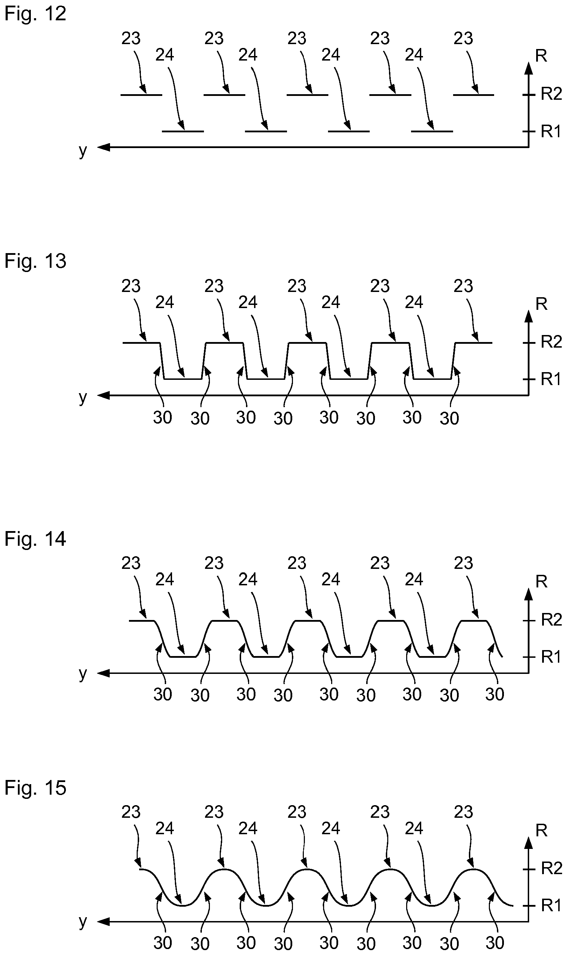

Bisher wurde davon ausgegangen, dass der Übergang zwischen den reflektierenden Segmenten 23 und den Lücken 24 sprungartig ist. Dies ist für die Ausführungsform gemäß Fig. 3 und 4 für die erste reflektierende Schicht 21 in Fig. 12 vergrößert für einige reflektierende Segmente 23 und Lücken 24 dargestellt. Dabei weisen die reflektierenden Segmente 23 eine Reflektivität R2 und die Lücken 24 eine Reflektivität R1 auf, wobei die Reflektivität R2 größer ist als die Reflektivität R1. So kann R2 beispielsweise 100 % oder nahezu 100 % und R1 eine Reflektivität von 0 % oder nahezu 0 % aufweisen. Es sind jedoch auch andere Werte für R1 und R2 möglich. Wesentlich ist, dass R2 stets größer als R1 ist.

In einer Weiterbildung muß der Übergang zwischen den reflektierenden Segmenten 23 und den Lücken 24 nicht sprungartig sein. Es kann ein kontinuierlicher Übergang vorliegen, wie durch die Flanken 30 in der Darstellung gemäß Fig. 13 angedeutet ist.

Bei dieser Ausführungsform ist zwar schon ein kontinuierlicher Übergang vorhanden. Jedoch fängt dieser an den reflektierenden Segmenten 23 und den Lücken 24 plötzlich oder abrupt an, so dass der Reflektivitätsverlauf an diesen Stellen einen Knick aufweist und nicht kontinuierlich ist.

Natürlich kann der Reflektivitätsverlauf auch kontinuierlich sein, wie in Fig. 14 angedeutet ist. Insbesondere kann auch der Reflektivitätsverlauf über die reflektierenden Segmente 23 und die Lücken 24 kontinuierlich sein, wie in Fig. 15 angedeutet ist. Wesentlich ist dabei, dass es Abschnitte mit einer höheren Reflektivität (reflektierende Segmente 23) und Abschnitte mit einer geringeren Reflektivität (Lücken 24) gibt.

Die in Verbindung mit Fig. 12 bis 15 beschriebenen Weiterbildungen können natürlich auch für die zweite reflektierende Schicht 22 vorgesehen sein.

Bei dem erfindungsgemäßen Brillenglas 2 kann die Rückseite 15 insbesondere eine Krümmung aufweisen, um eine Fehlsichtigkeitskorrektur zu bewirken. Damit wird in vorteilhafter Weise erreicht, dass auch das dargestellte virtuelle Bild für den Benutzer scharf wahrnehmbar ist, da die Auskopplung der Lichtbündel 9 über die Rückseite 15, die die Korrekturfläche für den Benutzer ist, erfolgt.

Bei der bisher beschriebenen Ausführungsform war der Aufbau des Brillenglases zweischalig. Es ist auch ein mehr als zweischaliger Aufbau möglich. Beispielsweise kann eine weitere Innenschale vorgesehen sein, die an der Innenschale 20 anliegt. In diesem Fall wären beide reflektierende Schichten 21 und 22 im Brillenglas 3 vergraben.

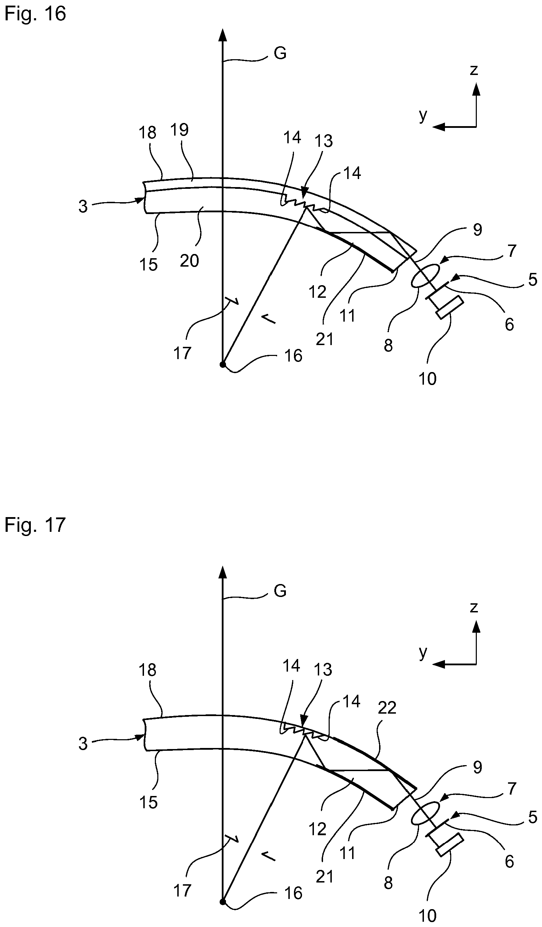

In Fig. 16 ist eine Abwandlung des erfindungsgemäßen Brillenglases in gleicher Weise wie in Fig. 2 dargestellt, wobei bei dieser Abwandlung die zweite reflektierende Schicht 22 nicht vorgesehen ist und statt dessen eine innere Totalreflexion an der Vorderseite 18 stattfindet.

In Fig. 17 ist eine weitere Abwandlung gezeigt, bei der das Brillenglas 3 einschalig ausgebildet ist. Es sind wiederum zwei reflektierende Schichten 21 und 22 vorgesehen, die in diesem Fall an der Rückseite 15 und der Vorderseite 18 angeordnet sind. Die reflektiven Facetten 14 sind vergraben ausgebildet und bevorzugt so mit Material des Brillenglases 3 aufgefüllt, dass die Vorderseite 18 eine glatte, durchgehende Seite ist.

Die Materialien der Innen- und Außenschale 20 und 19 sind bevorzugt gleich, so dass sie einen identischen Brechungsindex aufweisen. Die Innen- und Außenschalle 20 und 19 sind bevorzugt ganzflächig verklebt, so dass ein kompaktes erstes Brillenglas 3 vorliegt.

Bei der erfindungsgemäßen Anzeigevorrichtung 1 erfolgt die Einspiegelung des virtuellen Bildes in das Gesichtsfeld des Benutzers über das erste Brillenglas 3. Natürlich ist auch eine Einspiegelung über das zweite Brillenglas 4 möglich. Des weiteren kann die Anzeigevorrichtung 1 so ausgebildet sein, dass Informationen bzw. virtuelle Bilder über beide Brillengläser 3, 4 eingespiegelt werden. Dabei kann die Einspiegelung so erfolgen, dass ein dreidimensionaler Bildeindruck entsteht. Dies ist jedoch nicht zwingend notwendig.

Die Brillengläser 3, 4 können eine Brechkraft von Null oder eine von Null verschiedene Brechkraft (insbesondere zur Korrektur von Fehlsichtigkeiten) aufweisen. Wie in den Figuren gezeigt ist, sind sowohl die Vorderseite 11 als auch die Rückseite 12 des Brillenglases 3 gekrümmt ausgebildet. Die Vorderseite 11 kann insbesondere sphärisch gekrümmt sein. Wenn das Brillenglas eine von Null verschiedene Brechkraft aufweist, um eine Fehlsichtigkeit zu korrigieren, ist in der Regel die Krümmung der Rückseite 15 entsprechend gewählt, um die entsprechende Korrektur zu erreichen. Die Rückseite 15 kann eine von der sphärischen Form abweichende Krümmung aufweisen.

Die Haltevorrichtung 2 muß nicht als brillenartige Haltevorrichtung ausgebildet sein. Es ist auch jede andere Art der Haltevorrichtung möglich, mit der ein Aufsetzen oder Tragen der Anzeigevorrichtung auf dem Kopf des Benutzers erfolgen kann.

## Patentansprüche

1. Brillenglas für eine auf den Kopf eines Benutzers aufsetzbare und ein Bild erzeugende Anzeigevorrichtung (1),
wobei das Brillenglas (3) eine Vorderseite (18) und eine Rückseite (15),
einen Einkoppelabschnitt (11) und einen vom Einkoppelabschnitt (11) beabstandeten Auskoppelabschnitt (13) sowie
einen Lichtführungskanal (12) aufweist, der dazu geeignet ist, Lichtbündel (9) von Pixeln des erzeugten Bildes, die über den Einkoppelabschnitt (11) des Brillenglases (3) in das Brillenglas (3) eingekoppelt sind, im Brillenglas (3) bis zum Auskoppelabschnitt (13) zu führen, von dem sie aus dem Brillenglas (3) ausgekoppelt werden,
wobei der Lichtführungskanal (12) eine erste reflektierende Schicht (21, 22) aufweist, die sich vom Einkoppelabschnitt (11) bis zum Auskoppelabschnitt (13) erstreckt und an der die Lichtbündel (9) zur Führung bis zum Auskoppelabschnitt (13) reflektiert werden,
**dadurch gekennzeichnet, dass**
die erste reflektierende Schicht (21, 22) mehrere voneinander beabstandete transparente Lücken (24, 26) zur Erhöhung der Transmissivität des Lichtführungskanals (12) aufweist.

2. Brillenglas nach Anspruch 1, **dadurch gekennzeichnet, dass** die mehreren Lücken (24, 26) in einer ersten Richtung vom Einkoppelabschnitt (11) zum Auskoppelabschnitt (13) hin und/oder quer zur ersten Richtung beabstandet sind.

3. Brillenglas nach Anspruch 1 oder 2, **dadurch gekennzeichnet, dass** die mehreren Lücken (24, 26) in einer vorbestimmten Richtung äquidistant angeordnet sind.

4. Brillenglas nach einem der obigen Ansprüche, **dadurch gekennzeichnet, dass** die zumindest eine Lücke (24, 26) kreisförmig, oval oder polygonförmig ausgebildet ist.

5. Brillenglas nach einem der obigen Ansprüche, **dadurch gekennzeichnet, dass** die erste reflektierende Schicht (21, 22) segmentiert mit transparenten Lücken (24, 26) ausgebildet ist.

6. Brillenglas nach einem der obigen Ansprüche, **dadurch gekennzeichnet, dass** außerhalb des Lichtführungskanals (12) eine winkelselektive Absorptionsschicht (28) vor der zumindest einen Lücke (24, 26) der ersten reflektierenden Schicht (21, 22) angeordnet ist, die Licht, das unter einem Winkel aus einem Bereich von einen vorbestimmten ersten Grenzwinkel bis zu 90° auf die Absorptionsschicht trifft, absorbiert und Licht, das unter einem Winkel von 0° bis zu einem vorbestimmten zweiten Grenzwinkel trifft, transmittiert, wobei der zweite Grenzwinkel kleiner als oder gleich wie der erste Grenzwinkel ist.

7. Brillenglas nach einem der obigen Ansprüche, **dadurch gekennzeichnet, dass** zwischen der zumindest einen Lücke (24, 26) und der reflektierenden Schicht (21, 22) ein Übergangsbereich (30) vorliegt, in dem die Reflektivität in Richtung von der Lücke (24, 26) zur reflektierenden Schicht (21, 22) zunimmt.

8. Brillenglas nach einem der obigen Ansprüche, **dadurch gekennzeichnet, dass** der Lichtführungskanal (12) eine der ersten reflektierenden Schicht (21, 22) gegenüberliegende zweite reflektierende Schicht (22, 21) aufweist.

9. Brillenglas nach Anspruch 8, **dadurch gekennzeichnet, dass** die zweite reflektierende Schicht (22, 21) zumindest eine transparente Lücke (26, 24) aufweist.

10. Brillenglas nach Anspruch 9, **dadurch gekennzeichnet, dass** zumindest eine transparente Lücke (24, 26) der ersten reflektierenden Schicht (21, 22) einer transparenten Lücke (24, 26) der zweiten reflektierenden Schicht (22, 21) gegenüberliegt.

11. Brillenglas nach einem der obigen Ansprüche, **dadurch gekennzeichnet, dass** der Auskoppelabschnitt (13) mehrere nebeneinander angeordnete reflektive Umlenkflächen (14) aufweist.

12. Brillenglas nach einem der obigen Ansprüche, **dadurch gekennzeichnet, dass** der Auskoppelabschnitt (13) im Brillenglas (3) vergraben ausgebildet ist.

13. Anzeigevorrichtung mit
einer auf den Kopf eines Benutzers aufsetzbaren Haltevorrichtung (2),
einem an der Haltevorrichtung (2) befestigten Bilderzeugungsmodul (5), das ein Bild erzeugt, und
einer an der Haltevorrichtung (2) befestigten Abbildungsoptik (7), die ein Brillenglas (3) nach einem der obigen Ansprüche aufweist und die das erzeugte Bild im auf dem Kopf des Benutzers aufgesetzten Zustand der Haltevorrichtung (2) so abbildet, dass es der Benutzer als virtuelles Bild wahrnehmen kann.

## Claims

1. Spectacle lens for a display device (1) that can be fitted on the head of a user and generates an image,
wherein the spectacle lens (3) comprises a front side (18) and a rear side (15),
a coupling-in section (11) and a coupling-out section (13) spaced apart from the coupling-in section (11), as well as
a light guiding channel (12) which is suitable for guiding light bundles (9) of pixels of the generated image, which are coupled into the spectacle lens (3) via the coupling-in section (11) of the spectacle lens (3), in the spectacle lens (3) to the coupling-out section (13), by which they are coupled out of the spectacle lens (3),
wherein the light guiding channel (12) comprises a first reflecting layer (21, 22), which extends from the coupling-in section (11) to the coupling-out section (13) and on which the light bundles (9) are reflected for guiding to the coupling-out section (13),
**characterized in that**
the first reflecting layer (21, 22) comprises several transparent gaps (24, 26) spaced apart from each another for increasing the transmissivity of the light guiding channel (12).

2. Spectacle lens according to claim 1, **characterized in that** the several gaps (24, 26) are spaced apart in a first direction from the coupling-in section (11) towards the coupling-out section (13) and/or transverse to the first direction.

3. Spectacle lens according to claim 1 or 2, **characterized in that** the several gaps (24, 26) are arranged equidistantly in a predetermined direction.

4. Spectacle lens according to one of the above claims, **characterized in that** the at least one gap (24, 26) is formed in the shape of a circle, oval or polygon.

5. Spectacle lens according to one of the above claims, **characterized in that** the first reflecting layer (21, 22) is formed segmented with transparent gaps (24, 26).

6. Spectacle lens according to one of the above claims, **characterized in that**, outside of the light guiding channel (12), an angle-selective absorption layer (28) is arranged in front of the at least one gap (24, 26) of the first reflecting layer (21, 22), which absorption layer absorbs light which strikes the absorption layer at an angle from a range from a predetermined first critical angle up to 90° and transmits light which strikes at an angle of from 0° up to a predetermined second critical angle, wherein the second critical angle is smaller than or equal to the first critical angle.

7. Spectacle lens according to one of the above claims, **characterized in that**, between the at least one gap (24, 26) and the reflecting layer (21, 22), a transition region (30) is present, in which the reflectivity increases in the direction from the gap (24, 26) to the reflecting layer (21, 22).

8. Spectacle lens according to one of the above claims, **characterized in that** the light guiding channel (12) comprises a second reflecting layer (22, 21) which is opposite the first reflecting layer (21, 22).

9. Spectacle lens according to claim 8, **characterized in that** the second reflecting layer (22, 21) comprises at least one transparent gap (26, 24).

10. Spectacle lens according to claim 9, **characterized in that** at least one transparent gap (24, 26) of the first reflecting layer (21, 22) is opposite a transparent gap (24, 26) of the second reflecting layer (22, 21).

11. Spectacle lens according to one of the above claims, **characterized in that** the coupling-out section (13) comprises several reflective deflecting surfaces (14) arranged next to each other.

12. Spectacle lens according to one of the above claims, **characterized in that** the coupling-out section (13) is formed buried in the spectacle lens (3).

13. Display device with
a holder (2) that can be fitted on the head of a user,
an image-generating module (5) secured to the holder (2), which generates an image, and
an imaging optical system (7) secured to the holder (2), which comprises a spectacle lens (3) according to one of the above claims and which, when the holder (2) is fitted on the head of the user, images the generated image in such a way that the user can perceive it as a virtual image.

## Revendications

1. Verre de lunettes pour un dispositif d'affichage (1) qui peut être posé sur la tête d'un utilisateur et qui génère une image,
le verre de lunettes (3) possédant un côté avant (18) et un côté arrière (15),
une portion d'injection (11) et une portion de sortie (13) espacée de la portion d'injection (11), ainsi qu'un canal de guidage de lumière (12), qui est adapté pour guider des faisceaux lumineux (9) de pixels de l'image générée, lesquels sont injectés dans le verre de lunettes (3) par le biais de la portion d'injection (11) du verre de lunettes (3), dans le verre de lunettes (3) jusqu'à la portion de sortie (13), par laquelle ils sont sortis du verre de lunettes (3),
le canal de guidage de lumière (12) comprenant une première couche réfléchissante (21, 22), qui s'étend depuis la portion d'injection (11) jusqu'à la portion de sortie (13), et sur laquelle les faisceaux lumineux (9) sont réfléchis pour le guidage jusqu'à la portion de sortie (13),
**caractérisé en ce que**
la première couche réfléchissante (21, 22) comprend plusieurs lacunes transparentes espacées les unes des autres (24, 26) pour augmenter la transmissivité du canal de guidage de lumière (12).

2. Verre de lunettes selon la revendication 1, **caractérisé en ce que** lesdites plusieurs lacunes (24, 26) sont espacées dans une première direction allant de la portion d'injection (11) jusqu'à la portion de sortie (13) et/ou perpendiculairement à la première direction.

3. Verre de lunettes selon la revendication 1 ou 2, **caractérisé en ce que** lesdites plusieurs lacunes (24, 26) sont agencées de manière équidistante dans une direction prédéterminée.

4. Verre de lunettes selon l'une des revendications précédentes, **caractérisé en ce que** ladite au moins une lacune (24, 26) est circulaire, ovale ou polygonale.

5. Verre de lunettes selon l'une des revendications précédentes, **caractérisé en ce que** la première couche réfléchissante (21, 22) est configurée sous forme segmentée avec des lacunes transparentes (24, 26).

6. Verre de lunettes selon l'une des revendications précédentes, **caractérisé en ce qu'**en dehors du canal de guidage de lumière (12), une couche d'absorption sélective en fonction de l'angle (28) est agencée avant ladite au moins une lacune (24, 26) de la première couche réfléchissante (21, 22), qui absorbe la lumière qui arrive sur la couche d'absorption à un angle dans une plage allant d'un premier angle limite prédéterminé jusqu'à 90°, et qui transmet la lumière qui arrive à un angle de 0 °C jusqu'à un deuxième angle limite prédéterminé, le deuxième angle limite étant inférieur ou égal au premier angle limite.

7. Verre de lunettes selon l'une des revendications précédentes, **caractérisé en ce qu'**une zone de transition (30) est présente entre ladite au moins une lacune (24, 26) et la couche réfléchissante (21, 22), dans laquelle la réflectivité augmente dans la direction allant de la lacune (24, 26) vers la couche réfléchissante (21, 22).

8. Verre de lunettes selon l'une des revendications précédentes, **caractérisé en ce que** le canal de guidage de lumière (12) comprend une deuxième couche réfléchissante (22, 21) opposée à la première couche réfléchissante (21, 22).

9. Verre de lunettes selon la revendication 8, **caractérisé en ce que** la deuxième couche réfléchissante (22, 21) comprend au moins une lacune transparente (26, 24) .

10. Verre de lunettes selon la revendication 9, **caractérisé en ce qu'**au moins une lacune transparente (24, 26) de la première couche réfléchissante (21, 22) est opposée à une lacune transparente (24, 26) de la deuxième couche réfléchissante (22, 21).

11. Verre de lunettes selon l'une des revendications précédentes, **caractérisé en ce que** la portion de sortie (13) comprend plusieurs surfaces de déviation réflectives (14) agencées les unes à côté des autres.

12. Verre de lunettes selon l'une des revendications précédentes, **caractérisé en ce que** la portion de sortie (13) est configurée sous forme enfouie dans le verre de lunette (3).

13. Dispositif d'affichage comprenant
un dispositif de maintien (2) qui peut être posé sur la tête d'un utilisateur,
un module de génération d'image (5) fixé au dispositif de maintien (2) et qui génère une image,
et
une optique de représentation (7) fixée au dispositif de maintien (2), laquelle possède un verre de lunettes (3) selon l'une des revendications précédentes et représente l'image générée dans l'état posé sur la tête de l'utilisateur du dispositif de maintien (2) de telle sorte que l'utilisateur peut la percevoir comme une image virtuelle.
